# EUROPÄISCHE PATENTANMELDUNG

(11) **EP 2 193 863 A1**
(43) Veröffentlichungstag der Anmeldung: **09.06.2010**
(21) Anmeldenummer: 08020890.3
(22) Anmeldetag: 02.12.2008
(51) Int. Cl.: B22F 3/105, B29C 67/00

(54) **Trägeranordnung für eine Anlage zur Herstellung von Werkstücken durch Beaufschlagen von Pulverschichten mit elektromagnetischer Strahlung oder Teilchenstrahlung**

(71) Anmelder: MTT Technologies GmbH, 23556 Lübeck (DE)
(72) Erfinder: Schöneborn, Henner, 23858 Reinfeld (DE); Glaner, Wolfgang, 23966 Karow (DE)
(74) Vertreter: Schicker, Silvia

(57) **Zusammenfassung**

Eine Trägeranordnung (10) zur Verwendung in einer Anlage zur Herstellung von Werkstücken durch Beaufschlagen von Pulverschichten mit elektromagnetischer Strahlung oder Teilchenstrahlung umfasst ein Gehäuseelement (12) sowie einen in dem Gehäuseelement (12) angeordneten Träger (18). Der Träger ist dazu eingerichtet, im Betrieb der Anlage zur Herstellung von Werkstücken durch Beaufschlagen von Pulverschichten mit elektromagnetischer Strahlung oder Teilchenstrahlung Rohstoffpulver und/oder ein aus dem Rohstoffpulver hergestelltes Werkstück aufzunehmen. Ein erstes Dichtelement (40) zur Abdichtung des Trägers (18) gegenüber dem Gehäuseelement (12) umfasst einen Grundkörper (44) aus einem elastisch verformbaren Material, der durch mindestens ein Federelement (58, 60) in eine gewünschte Form vorgespannt wird.

## Beschreibung

Die vorliegende Erfindung betrifft eine Trägeranordnung, die zum Einsatz in einer Anlage zur Herstellung von dreidimensionalen Werkstücken durch Beaufschlagen von Pulverschichten mit elektromagnetischer Strahlung oder Teilchenstrahlung vorgesehen ist. Ferner betrifft die Erfindung eine mit einer derartigen Trägeranordnung ausgestattete Anlage zur Herstellung von Werkstücken durch Beaufschlagen von Pulverschichten mit elektromagnetischer Strahlung oder Teilchenstrahlung, insbesondere eine Laserschmelz- oder Lasersinteranlage.

Das selektive Laserschmelzen oder Lasersintern ist ein generatives Schichtbauverfahren, durch das pulverförmige, insbesondere metallische und/oder keramische Rohstoffe zu komplex geformten dreidimensionalen Werkstücken verarbeitet werden können. Hierzu wird eine Rohstoffpulverschicht auf einen Träger aufgebracht und in Abhängigkeit der gewünschten Geometrie des zu erstellenden Werkstücks ortselektiv mit Laserstrahlung beaufschlagt. Die in die Pulverschicht eindringende Laserstrahlung bewirkt eine Erwärmung und folglich eine Verschmelzung oder Versinterung der Rohstoffpulverpartikel. Anschließend werden sukzessiv weitere Rohstoffpulverschichten auf die bereits laserbehandelte Schicht auf dem Träger aufgebracht bis das Werkstück die gewünschte Form und Größe hat. Selektives Laserschmelzen oder Lasersintern kann insbesondere zur Herstellung von Prototypen, Werkzeugen, Ersatzteilen oder medizinischen Prothesen, wie zum Beispiel zahnärztlichen oder orthopädischen Prothesen anhand von CAD-Daten eingesetzt werden.

Eine aus der EP 1 793 979 A1 bekannte Anlage zur Herstellung von Formkörpern aus pulverförmigen Rohstoffen durch selektives Laserschmelzen umfasst einen unter einer Schutzgasatmosphäre gehaltenen Prozessraum mit einer Bodenplatte, die mit einer Mehrzahl von Öffnungen versehen ist. An die in der Bodenplatte des Prozessraums ausgebildeten Öffnungen schließen sich jeweils Bauzylinder an, in denen kolbenartige Träger für die herzustellenden Formkörper mittels einer gemeinsamen Vertikalantriebseinheit vertikal verlagerbar angeordnet sind. Eine Pulverschicht-Präparierungseinrichtung dient dazu, Rohstoffpulver auf die Träger aufzubringen. Um zu verhindern dass im Betrieb der Anlage Schutzgas aus dem Prozessraum entweicht, sind die Träger abdichtend in den Bauzylindern geführt.

Die Erfindung ist auf die Aufgabe gerichtet, eine Trägeranordnung für eine Anlage zur Herstellung von Werkstücken durch Beaufschlagen von Pulverschichten mit elektromagnetischer Strahlung oder Teilchenstrahlung bereitzustellen, die eine optimierte Abdichtung eines Trägers gegenüber einem den Träger aufnehmenden Gehäuseelement ermöglicht. Ferner ist die Erfindung auf die Aufgabe gerichtet, eine mit einer derartigen Trägeranordnung ausgestattete Anlage zur Herstellung von Werkstücken durch Beaufschlagen von Pulverschichten mit elektromagnetischer Strahlung oder Teilchenstrahlung, insbesondere eine Laserschmelz- oder Lasersinteranlage bereitzustellen.

Diese Aufgabe wird durch eine Trägeranordnung mit den Merkmalen des Anspruchs 1 sowie eine Anlage zur Herstellung von Werkstücken durch Beaufschlagen von Pulverschichten mit elektromagnetischer Strahlung oder Teilchenstrahlung mit den Merkmalen des Anspruchs 15 gelöst.

Eine erfindungsgemäße Trägeranordnung zur Verwendung in einer Anlage zur Herstellung von Werkstücken durch Beaufschlagen von Pulverschichten mit elektromagnetischer Strahlung oder Teilchenstrahlung, insbesondere einer Laserschmelz- oder Lasersinteranlage umfasst ein Gehäuseelement sowie einen in dem Gehäuseelement angeordneten Träger. Der Träger ist dazu eingerichtet, im Betrieb der Anlage zur Herstellung von Werkstücken durch Beaufschlagen von Pulverschichten mit elektromagnetischer Strahlung oder Teilchenstrahlung, Rohstoffpulver und/oder ein aus dem Rohstoffpulver hergestelltes Werkstück aufzunehmen. Der Träger kann einteilig ausgebildet sein oder aus mehreren Trägerkomponenten bestehen.

Beispielsweise kann der Träger ein Substratelement umfassen, auf das im Betrieb der Anlage zur Herstellung von Werkstücken durch Beaufschlagen von Pulverschichten mit elektromagnetischer Strahlung oder Teilchenstrahlung das Rohstoffpulver und/oder ein aus dem Rohstoffpulver hergestelltes Werkstück aufgebracht werden kann. Das Substratelement kann auf einem beispielsweise aus Titan bestehenden Metallelement gelagert sein, das seinerseits auf einem Keramikelement gelagert sein kann. Zwischen dem Keramikelement und dem Metallelement kann ein Heizelement vorgesehen sein, dessen Form und Größe der Form und Größe des Metallelements und/oder Keramikelements entsprechen kann. Alternativ dazu kann das Heizelement auch kleiner sein als das Metallelement und/oder das Keramikelement. In einem derartigen Fall ist das Heizelement vorzugsweise in einer Ausnehmung angeordnet, die in einer von dem Substratelement abgewandten Oberfläche des Metallelements ausgebildet ist.

Der einteilig ausgebildete oder aus mehreren Trägerkomponenten bestehende Träger kann jede beliebige gewünschte Form aufweisen. Beispielsweise kann eine Oberfläche des Trägers bzw. eines Substratelements des Trägers, die im Betrieb der Anlage zur Herstellung von Werkstücken durch Beaufschlagen von Pulverschichten mit elektromagnetischer Strahlung oder Teilchenstrahlung Rohstoffpulver und/oder ein aus dem Rohstoffpulver hergestelltes Werkstück aufnimmt, eben ausgebildet und kreisförmig, quadratisch oder rechteckig sein. Falls gewünscht, kann die Oberfläche des Trägers bzw. des Substratelements abgerundete Ecken aufweisen. Die Form des Gehäuseelements ist vorzugsweise an die Form des Trägers angepasst. Beispielsweise kann das Gehäuseelement einen hohlzylindrischen Basiskörpers umfassen, dessen Innenumfang an einen Außenumfang des einteilig ausgebildeten oder aus mehreren Trägerkomponenten bestehenden Trägers derart angepasst, dass der Träger abdichtend in dem Gehäuseelement aufgenommen werden kann.

Grundsätzlich kann der Träger ein starr fixierter Träger sein. Vorzugsweise ist der Träger jedoch in dem Gehäuseelement verschiebbar, so dass der Träger mit zunehmender Bauhöhe des schichtweise aufgebauten Werkstücks in dem Gehäuseelement verschoben werden kann. Zu diesem Zweck umfasst die erfindungsgemäße Trägeranordnung vorzugsweise eine Antriebseinrichtung, die derart mit dem Träger verbunden ist, dass sie den Träger im Betrieb der Anlage zur Herstellung von Werkstücken durch Beaufschlagen von Pulverschichten mit elektromagnetischer Strahlung oder Teilchenstrahlung bei Bedarf in dem Gehäuseelement verschieben kann. Vorzugsweise ist die Antriebseinrichtung in Form einer Hubeinrichtung ausgebildet, die bei Bedarf für eine vertikale Verschiebung des Trägers in dem Gehäuseelement sorgt. Die Hubeinrichtung kann einen Schrittmotor umfassen, der über ein Getriebe mit einer Hubspindelanordnung gekoppelt ist. Die Hubspindelanordnung kann ihrerseits mit einem Hubelement verbunden sein, das den einteilig ausgebildeten oder aus mehreren Trägerkomponenten bestehenden Träger in dem Gehäuseelement in vertikaler Richtung, je nach Bedarf, absenkt oder anhebt.

Im in der Anlage zur Herstellung von Werkstücken durch Beaufschlagen von Pulverschichten mit elektromagnetischer Strahlung oder Teilchenstrahlung montierten Zustand bildet die erfindungsgemäße Trägeranordnung einen Teil eines Prozessraums, in den ein in der Anlage zu verarbeitendes Rohstoffpulver eingebracht und mit elektromagnetischer Strahlung oder Teilchenstrahlung, vorzugsweise Laserstrahlung beaufschlagt wird. Das Rohstoffpulver kann ein Kunststoffpulver, ein keramisches Pulver, ein metallisches Pulver und/oder ein beliebiges anderes Pulver mit einer beliebigen geeigneten Korngröße bzw. Korngrößenverteilung sein. Vorzugsweise werden jedoch Pulver mit Korngrößen < 200 µm verarbeitet. Der Prozessraum der Anlage zur Herstellung von Werkstücken durch Beaufschlagen von Pulverschichten mit elektromagnetischer Strahlung oder Teilchenstrahlung kann dazu eingerichtet sein, unter einer Schutzgasatmosphäre gehalten zu werden. Um zu verhindern, dass Schutzgas und/oder Rohstoffpulver im Betrieb der Anlage aus dem Prozessraum austritt, ist es wichtig, den Prozessraum gegenüber der Umgebung abzudichten.

Die erfindungsgemäße Trägeranordnung umfasst daher ein erstes Dichtelement zur Abdichtung des Trägers gegenüber dem Gehäuseelement, das einen Grundkörper aus einem elastisch verformbaren Material umfasst. Der Grundkörper des ersten Dichtelements wird durch mindestens ein Federelement in eine gewünschte Form vorgespannt. Durch die federnde Vorspannung wird der Grundkörper des ersten Dichtelements stets in eine Dichtposition gedrängt, in der das erste Dichtelement für eine optimale Abdichtung des Trägers gegenüber dem Gehäuseelement sorgt. Das erste Dichtelement ist somit dazu in der Lage, selbsttätig, d.h. ohne dass ein Eingriff von außen erforderlich ist, einen im Betrieb der Anlage zur Herstellung von Werkstücken durch Beaufschlagen von Pulverschichten mit elektromagnetischer Strahlung oder Teilchenstrahlung auftretenden Abtrieb des ersten Dichtelements zu kompensieren. Der Einsatz eines ein Federelement umfassenden selbstnachstellenden ersten Dichtelements ist besonders vorteilhaft, wenn der Träger der erfindungsgemäßen Trägeranordnung verschiebbar in dem Gehäuseelement angeordnet ist, da das erste Dichtelement bei einer derartigen Anordnung einem besonders starken Abrieb durch Rohstoffpulverpartikel ausgesetzt ist, die aus dem Prozessraum in einen Zwischenraum zwischen einem Außenumfang des Trägers und einem Innenumfang des den Träger aufnehmenden Gehäuseelements eindringen.

Vorzugsweise erstreckt sich das erste Dichtelement zwischen dem Träger oder einer Trägerkomponente und dem Gehäuseelement um den gesamten Außenumfang des Trägers oder der Trägerkomponente. Dadurch wird eine optimierte Abdichtung des Trägers gegenüber dem Gehäuseelement gewährleistet.

Das erste Dichtelement kann zumindest teilweise in einer Nut aufgenommen sein, die in einer Umfangfläche des Trägers oder einer Trägerkomponente ausgebildet ist. Alternativ dazu kann das erste Dichtelement auch zumindest teilweise in einer Nut angeordnet sein, die in der Innenfläche des den Träger aufnehmenden Gehäuseelements ausgebildet ist. Dadurch wird sichergestellt, dass das erste Dichtelement im Betrieb der Anlage zur Herstellung von Werkstücken durch Beaufschlagen von Pulverschichten mit elektromagnetischer Strahlung oder Teilchenstrahlung, insbesondere bei einer Verschiebung des Trägers in dem Gehäuseelement, in seiner Position gehalten wird. In Abhängigkeit der Anordnung des ersten Dichtelements in der Trägeranordnung kann eine Dichtfläche des ersten Dichtelements mit einer Innenfläche des Gehäuseelements oder einer Außenumfangsfläche des Trägers oder einer Trägerkomponente zusammenwirken. Eine mit dem ersten Dichtelement zusammenwirkende Fläche weist vorzugsweise eine Oberflächengüte von R_{z} ≤ 9 auf.

Vorzugsweise besteht der Grundkörper des ersten Dichtelements aus einem Polytetrafluorethylenmaterial oder einem Polytetrafluorethylen-Copolymermaterial. Polytetrafluorethylen oder ein Polytetrafluorethylen-Copolymermaterial weist die gewünschten elastischen Eigenschaften auf und hat überdies den Vorteil, dass es sich, anders als beispielsweise ein Filzmaterial, nicht mit Pulver "vollsaugt". Ein erstes Dichtelement mit einem Grundkörper aus einem Polytetrafluorethylenmaterial oder einem Polytetrafluorethylen-Copolymermaterial hat daher eine verhältnismäßig hohe Lebensdauer. Ferner ist Polytetrafluorethylen oder ein Polytetrafluorethylen-Copolymermaterial hinsichtlich seiner Temperaturbeständigkeit und seines thermischen Ausdehnungsverhaltens besonders gut zum Einsatz in einer Trägeranordnung zur Verwendung in einer Anlage zur Herstellung von Werkstücken durch Beaufschlagen von Pulverschicht mit elektromagnetischer Strahlung oder Teilchenstrahlung geeignet.

Der Grundkörper des ersten Dichtelements kann ferner ein Fasermaterial, wie z.B. Kohlenstofffasern enthalten. Die Kohlenstofffasern können in eine Matrix aus Polytetrafluorethylenmaterial oder Polytetrafiluorethylen-Copolymermaterial eingebettet sein. Durch die Einbringung von Fasern, wie z.B. Kohlenstofffasern in den Grundkörper des ersten Dichtelements können die Materialeigenschaften, insbesondere die Temperaturbeständigkeit und das thermische Ausdehnungsverhalten des ersten Dichtelements besonders gut an die Anforderungen angepasst werden, die an das erste Dichtelement bei einem Einsatz in einer Trägeranordnung zur Verwendung in einer Anlage zur Herstellung von Werkstücken durch Beaufschlagen von Pulverschichten mit elektromagnetischer Strahlung oder Teilchenstrahlung gestellt werden.

Der Grundkörper des ersten Dichtelements kann im Bereich einer an seine Dichtfläche angrenzenden ersten Oberfläche mit einer ersten Nut versehen sein. Die erste Oberfläche kann sich im wesentlichen senkrecht zu der Dichtfläche des ersten Dichtelements erstrecken. In der ersten Nut kann ein erstes Federelement angeordnet sein. Das in der ersten Nut angeordnete erste Federelement kann dann eine Federkraft ausüben, die die Dichtfläche des ersten Dichtelements gegen ihre Gegenfläche, d.h. die Innenfläche des den Träger aufnehmenden Gehäuseelements oder die Außenumfangsfläche des Trägers oder einer Trägerkomponente drängt.

Der Grundkörper des ersten Dichtelements kann ferner im Bereich einer an die Dichtfläche des ersten Dichtelements angrenzenden zweiten Oberfläche mit einer zweiten Nut versehen sein. Die zweite Oberfläche kann sich, ähnlich wie die erste Oberfläche, im wesentlichen senkrecht zu der Dichtfläche erstrecken und gegenüber der ersten Oberfläche angeordnet sein. In der zweiten Nut ist vorzugsweise ein zweites Federelement angeordnet, das wiederum die Dichtfläche des ersten Dichtelements gegen ihre Gegenfläche, d.h. die Innenfläche des den Träger aufnehmenden Gehäuseelements oder die Außenumfangsfläche des Trägers oder einer Trägerkomponente drängt.

Das erste und/oder das zweite Federelement kann/können einen im wesentlichen U-förmigen Querschnitt aufweisen. Ein U-förmiges Federelement ist besonders gut geeignet, eine gewünschte Federvorspannkraft auf die Dichtfläche des ersten Dichtelements aufzubringen.

In der ersten und/oder der zweiten Nut, die in dem Grundkörper des ersten Dichtelements ausgebildet ist/sind, ist vorzugsweise ein Nutdichtelement zur Abdichtung der ersten/oder der zweiten Nut angeordnet. Das Nutdichtelement kann beispielsweise schnurförmig ausgebildet sein und aus einem elastisch verformbaren Material, wie z.B. Silikon bestehen. Das Nutdichtelement sorgt dafür, dass keine Rohstoffpulverpartikel in die in dem Grundkörper des ersten Dichtelements ausgebildete Nut eindringen und das erste Dichtelement verschmutzen. Vorzugsweise ist zumindest in der Nut ein Nutdichtelement angeordnet, die in einer Grundkörperoberfläche des ersten Dichtelements ausgebildet ist, die im in einer Anlage zur Herstellung von Werkstücken durch Beaufschlagen von Pulverschichten mit elektromagnetischer Strahlung oder Teilchenstrahlung montierten Zustand der erfindungsgemäßen Trägeranordnung dem Prozessraum der Anlage zugewandt ist.

Im Bereich der Dichtfläche des ersten Dichtelements ist der Grundkörper des ersten Dichtelements vorzugsweise mit einer Mehrzahl von Dichtlippen versehen. Vorzugsweise sind die Dichtlippen in einem Bereich der Dichtfläche ausgebildet, der von dem ersten und/oder dem zweiten Federelement gegen die Gegenfläche der Dichtfläche, d.h. die Innenfläche des den Träger aufnehmenden Gehäuseelements oder die Außenumfangsfläche des Trägers oder einer Trägerkomponente gedrängt wird.

Vorzugsweise ist das erste Dichtelement in einem Bereich des Trägers angeordnet, der im in einer Anlage zur Herstellung von Werkstücken durch Beaufschlagen von Pulverschichten mit elektromagnetischer Strahlung oder Teilchenstrahlung montierten Zustand der erfindungsgemäßen Trägeranordnung einem Prozessraum der Anlage zugewandt ist, d.h. relativ nah an dem Prozessraum der Anlage angeordnet ist, aber vorzugsweise nicht unmittelbar einen Teil des Prozessraums bildet. Wenn der Träger aus mehreren Trägerkomponenten besteht, kann das erste Dichtelement beispielsweise im Bereich einer Trägerkomponente angeordnet sein, die auf einer von dem Prozessraum abgewandten Seite an ein Substratelement zur Aufnahme von Rohstoffpulver und/oder eines aus dem Rohstoffpulver hergestellten Werkstücks angrenzt.

In einem Bereich des Trägers oder einer Komponente einer Antriebseinrichtung zur Verschiebung des Trägers in dem Gehäuseelement, der im in einer Anlage zur Herstellung von Werkstücken durch Beaufschlagen von Pulverschicht mit elektromagnetischer Strahlung oder Teilchenstrahlung montierten Zustand der erfindungsgemäßen Trägeranordnung von einem Prozessraum der Anlage abgewandt ist, ist vorzugsweise mindestens ein zweites Dichtelement zur Abdichtung des Trägers oder der Komponente der Antriebseinrichtung gegenüber dem Gehäuseelement vorgesehen. Die Komponente der Antriebseinrichtung zur Verschiebung des Trägers in dem Gehäuseelement, die mittels des zweiten Dichtelements gegenüber dem Gehäuseelement abgedichtet ist, kann beispielsweise ein Hubelement sein, das den Träger der Trägeranordnung abstützt und somit den Träger in dem Gehäuseelement anheben und absenken kann. In Abhängigkeit seiner Positionierung dient das zweite Dichtelement dazu, an der Innenfläche des Gehäuseelements oder der Außenumfangsfläche des Trägers oder einer Trägerkomponente beispielsweise aufgrund statischer Aufladung anhaftende Pulverpartikel abzutragen. Falls gewünscht oder erforderlich, können auch mehrere zweite Dichtelemente vorgesehen sein.

Vorzugsweise besteht das zweite Dichtelement aus einem Filzmaterial. Ein Filzmaterial ist besonders gut geeignet, Rohstoffpulverpartikel von der Innenfläche des Gehäuseelements oder der Außenumfangsfläche des Trägers oder einer Trägerkomponente zu lösen und aufzunehmen. Wenn das Filzmaterial mit Rohstoffpulver "gesättigt" ist, muss das zweite Dichtelement ausgetauscht werden.

Ähnlich wie das erste Dichteelement kann auch das zweite Dichtelement zumindest teilweise in einer weiteren Nut aufgenommen sein, die in einer Umfangsfläche des Trägers, einer Trägerkomponente oder einer Komponente einer Antriebseinrichtung zur Verschiebung des Trägers in dem Gehäuseelement ausgebildet ist. Alternativ dazu kann das zweite Dichtelement auch zumindest teilweise in einer Nut angeordnet sein, die in der Innenfläche des den Träger aufnehmenden Gehäuseelements ausgebildet ist. Falls mehrere zweite Dichtelemente vorhanden sind, kann ein zweites Dichtelement zumindest teilweise in einer Nut aufgenommen sein, die in einer Umfangsfläche des Trägers, einer Trägerkomponente oder einer Komponente einer Antriebseinrichtung zur Verschiebung des Trägers in dem Gehäuseelement ausgebildet ist. Ein weiteres zweites Dichtelement kann dagegen in einer Nut aufgenommen sein, die in der Innenfläche des den Träger aufnehmenden Gehäuseelements ausgebildet ist. Dadurch wird sichergestellt, dass auch das zweite Dichtelement/die zweiten Dichtelemente im Betrieb der Anlage zur Herstellung von Werkstücken durch Beaufschlagen von Pulverschicht mit elektromagnetischer Strahlung oder Teilchenstrahlung, insbesondere wenn der Träger in dem Gehäuseelement verschoben wird, sicher in seiner/ihrer Position gehalten wird/werden.

Eine erfindungsgemäße Anlage zur Herstellung von Werkstücken durch Beaufschlagen von Pulverschichten mit elektromagnetischer Strahlung oder Teilchenstrahlung, insbesondere eine Laserschmelz- oder Lasersinteranlage umfasst eine Trägeranordnung, die ein Gehäuseelement sowie einen in dem Gehäuseelement angeordneten Träger umfasst. Der Träger ist dazu eingerichtet, im Betrieb der Anlage zur Herstellung von Werkstücken durch Beaufschlagen von Pulverschichten mit elektromagnetischer Strahlung oder Teilchenstrahlung Rohstoffpulver und/oder ein aus dem Rohstoffpulver hergestelltes Werkstück aufzunehmen. Ferner umfasst die erfindungsgemäße Anlage eine über den Träger bewegbare Pulverauftragvorrichtung zum schichtweisen Aufbringen des Rohstoffpulvers auf den Träger sowie eine Bestrahlungseinrichtung zur selektiven Beaufschlagung einer auf den Träger aufgebrachten Rohstoffpulverschicht mit elektromagnetischer Strahlung oder Teilchenstrahlung. Die Bestrahlungseinrichtung umfasst vorzugsweise einen fokussierten Laser.

Im Betrieb der erfindungsgemäßen Anlage wird ein Strahl der Bestrahlungseinrichtung über die auf den Träger aufgebrachten Rohstoffpulverschicht geführt, so dass die auf den Träger aufgebrachte Rohstoffpulverschicht ortselektiv mit elektromagnetischer Strahlung oder Teilchenstrahlung beaufschlagt wird. Der durch die Beaufschlagung mit elektromagnetischer Strahlung oder Teilchenstrahlung verursachte Wärmeeintrag in die Rohstoffpulverschicht bewirkt, dass die einzelnen Partikel des Rohstoffpulvers in der Rohstoffpulverschicht miteinander verschmelzen bzw. versintern und dadurch ein schichtweiser Aufbau erfolgt. Die Trägeranordnung der erfindungsgemäßen Anlage zur Herstellung von Werkstücken durch Beaufschlagen von Pulverschichten mit elektromagnetischer Strahlung oder Teilchenstrahlung ist eine oben beschriebene erfindungsgemäße Trägeranordnung.

Eine bevorzugte Ausführungsform der Erfindung wird nun anhand der beigefügten schematischen Zeichnungen näher erläutert, von denen
- Figur 1: eine Frontansicht einer Trägeranordnung zur Verwendung in einer Anlage zur Herstellung von Werkstücken durch Beaufschlagen von Pulverschichten mit elektromagnetischer Strahlung oder Teilchenstrahlung zeigt,
- Figur 2: eine Querschnittsansicht der Trägeranordnung gemäß Figur 1 zeigt,
- Figur 3: eine Detaildarstellung eines Ausschnitts der Trägeranordnung gemäß Figur 2 zeigt,
- Figur 4: eine Draufsicht einer Trägerkomponente der Trägeranordnung gemäß den Figuren 1 und 2 mit einem sich um einen Umfang der Trägerkomponente erstreckenden ersten Dichtelement zeigt, und
- Figur 5: eine Querschnittsansicht des ersten Dichtelements zeigt.

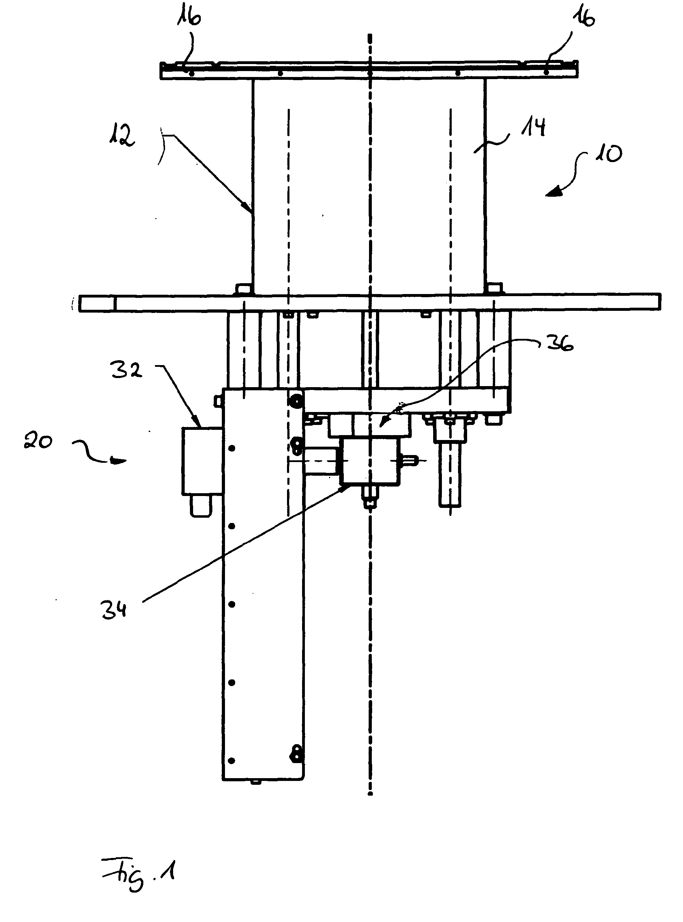

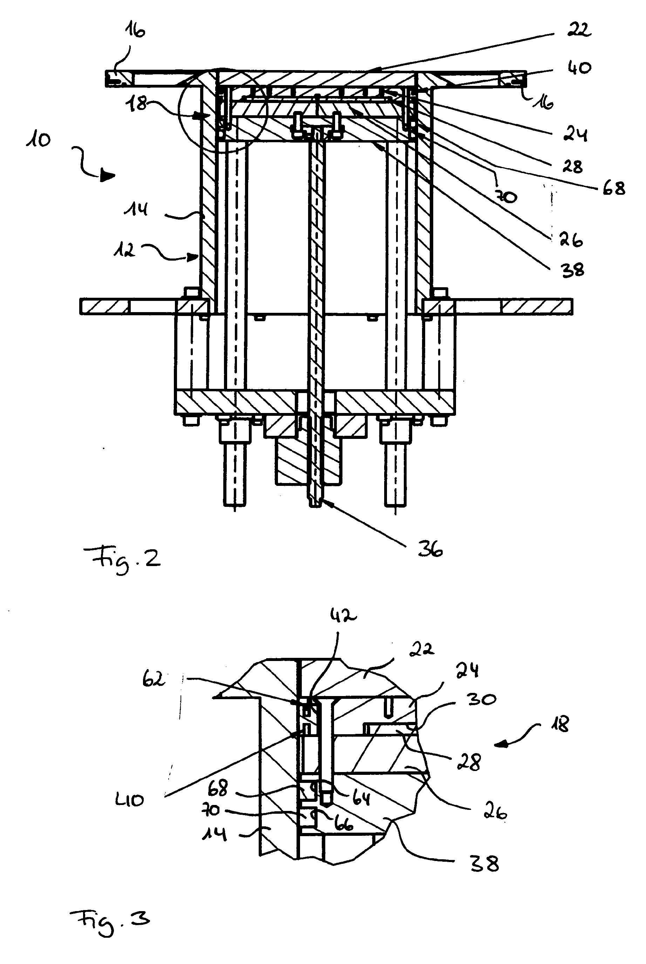

In den Figuren 1 und 2 ist eine Trägeranordnung 10 gezeigt, die zur Verwendung in einer Anlage zur Herstellung von Werkstücken durch Beaufschlagen von Pulverschichten mit elektromagnetischer Strahlung oder Teilchenstrahlung, insbesondere einer Laserschmelz- oder Lasersinteranlage vorgesehen ist. Die Trägeranordnung 10 umfasst ein Gehäuseelement 12 das einen hohlzylindrisch geformten Basiskörper 14 sowie einen sich von dem Basiskörper 14 nach außen erstreckenden Flanschbereich 16 aufweist. In dem Gehäuseelement 12 ist ein mehrteilig ausgebildeter Träger 18 durch eine Antriebseinrichtung 20 vertikal verschiebbar angeordnet.

Der Träger 18 umfasst ein plattenförmiges Substratelement 22, das im in einer Anlage zur Herstellung von Werkstücken durch Beaufschlagen von Pulverschichten mit elektromagnetischer Strahlung oder Teilchenstrahlung montierten Zustand der Trägeranordnung 10 dazu vorgesehen ist, von einer Pulverauftragvorrichtung auf den Träger 18 aufgebrachtes Rohstoffpulver aufzunehmen. Im Betrieb der Anlage werden von der Pulverauftragvorrichtung auf dem Substratelement 22 des Trägers 18 erzeugte Rohstoffpulverschichten ortselektiv mit elektromagnetischer Strahlung oder Teilchenstrahlung, insbesondere Laserstrahlung beaufschlagt. Dadurch erfolgt ein schichtweiser Werkstückaufbau, wobei das Werkstück ebenfalls auf dem Substratelement 22 des Trägers 18 angeordnet ist.

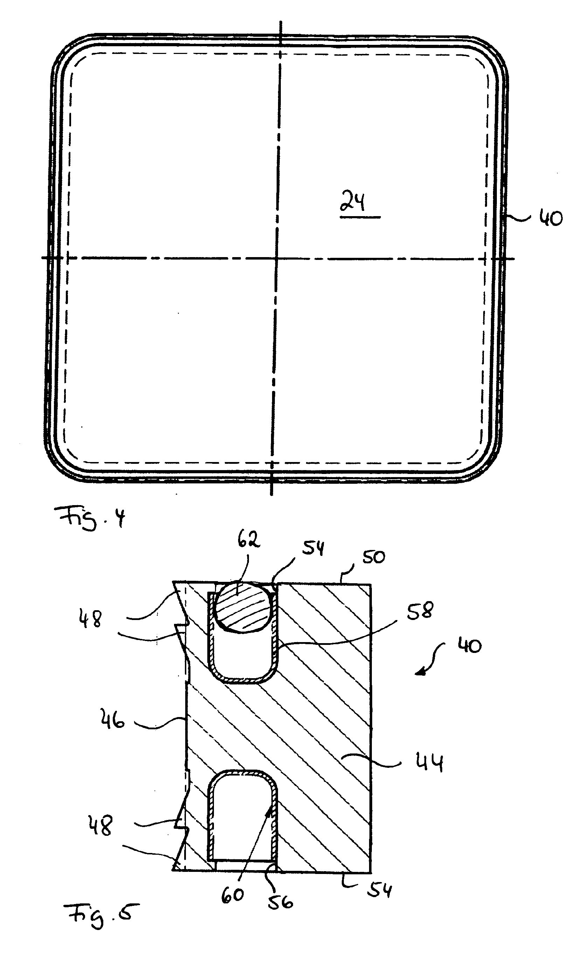

Das Substratelement 22 des Trägers 18 wird von einem plattenförmigen Element 24 aus Titan abgestützt, das sich seinerseits auf einem plattenförmigen Keramikelement 26 abstützt. Zwischen dem Titanelement 24 und dem Keramikelement 26 ist ein plattenförmiges Heizelement 28 angeordnet. Das Heizelement 28 ist in einer Ausnehmung 30 aufgenommen, die in einer von dem Substratelement 22 abgewandten Oberfläche des Titanelements 24 ausgebildet ist. Wie aus Figur 4 ersichtlich wird, ist das Titanelement 24 im wesentlichen quadratisch geformt und mit abgerundeten Ecken versehen. In ähnlicher Weise sind auch das Substratelement 22 und das Keramikelement 26 im wesentlichen quadratisch geformt und mit abgerundeten Ecken versehen. Die Form des Basiskörpers 14 des Gehäuseelements 12 ist an die Form des Substratelements 22, des Titanelements 24 und des Keramikelements 26 angepasst, d.h. der Basiskörper 14 des Gehäuseelements 12 weist einen an den Außenumfang des Substratelements 22, des Titanelements 24 und des Keramikelements 26 angepassten Innenumfang auf.

Die Antriebseinrichtung 20 zur vertikalen Verschiebung des Trägers 18 in dem Gehäuseelement 12 umfasst einen Schrittmotor 32, der über ein Getriebe 34 mit einer Spindelanordnung 36 gekoppelt ist. Die Spindelanordnung 36 ist ihrerseits mit einem plattenförmigen Hubelement 38 verbunden, das an einer von dem Substratelement 22 abgewandten Oberfläche des Keramikelements 26 anliegt. Bei einer vertikalen Verschiebung des Hubelements 38 mittels der Spindelanordnung 36 wird somit auch der Träger 18 in vertikaler Richtung in dem Gehäuseelement 12 bewegt.

Im in einer Anlage zur Herstellung von Werkstücken durch Beaufschlagen von Pulverschichten mit elektromagnetischer Strahlung oder Teilchenstrahlung montierten Zustand der Trägeranordnung 10 bildet das Substratelement 22 einen Teil eines Prozessraums, in dem das Rohstoffpulver verarbeitet, d.h. zur Herstellung eines Werkstücks mit elektromagnetischer Strahlung oder Teilchenstrahlung beaufschlagt wird. Der Prozessraum ist vorzugsweise dazu geeignet, unter einer Schutzgasatmosphäre gehalten zu werden. Um zu verhindern, dass Schutzgas und/oder Rohstoffpulverpartikel aus dem Prozessraum in die Umgebung austritt/austreten, ist der Prozessraum gegenüber der Umgebung abgedichtet. Um für eine ordnungsgemäße Abdichtung des Prozessraums gegenüber der Umgebung zu sorgen, muss auch der in dem Gehäuseelement 12 verschiebbare Träger 18 gegenüber dem Gehäuseelement 12 abgedichtet sein. Die Abdichtung des Trägers 18 gegenüber dem Gehäuseelement 12 erfolgt mittels eines ersten Dichtelements 40.

Wie am besten in den Figuren 3 und 4 zu erkennen ist, erstreckt sich das erste Dichtelement 40 um einen Umfang des Titanelements 24 und ist in einer Nut 42 aufgenommen, die in einer Umfangsfläche des Titanelements 24 ausgebildet ist. Wie Figur 3 zu entnehmen ist, ist die Nut 42 auf einer Seite offen ausgebildet, so dass sich das erste Dichtelement 40 mit einer von dem Substratelement 22 abgewandten Oberfläche auf einer dem Substratelement 22 zugewandten Oberfläche des Keramikelements 26 abstützt.

Wie insbesondere in Figur 5 zu erkennen ist, umfasst das erste Dichtelement 40 einen Grundkörper 44 aus einem elastisch verformbaren Material. In der gezeigten beispielhaften Anordnung besteht der Grundkörper 44 des ersten Dichtelements 40 aus einem Polytetrafluorethylenmaterial oder einem Polytetrafluorethylen-Copolymermaterial, in das Kohlenstofffasern eingelagert sind. Das erste Dichtelement 40 weist dann eine Temperaturbeständigkeit und ein thermisches Ausdehnungsverhalten auf, die an die an das erste Dichtelement 40 im Betrieb der Anlage zur Herstellung von Werkstücken durch Beaufschlagen von Pulverschichten mit elektromagnetischer Strahlung oder Teilchenstrahlung gestellt werden.

Eine Dichtfläche 46 des ersten Dichtelements 40 ist dazu vorgesehen, mit einer Innenfläche des Basiskörper 14 des Gehäuseelements 12 zusammenzuwirken. Zur Minimierung von Reibung weist die Innenfläche des Basiskörpers 14 des Gehäuseelements 12 eine Oberflächengüte von R_{z} ≤ 9 auf. Im Bereich der Dichtfläche 46 ist das erste Dichtelement 40 mit einer Mehrzahl von Dichtlippen 48 versehen.

Im Bereich einer an die Dichtfläche 46 angrenzenden und sich im wesentlichen senkrecht von der Dichtfläche 46 erstreckenden ersten Oberfläche 50 ist der Grundkörper 44 des ersten Dichtelements 40 mit einer ersten Nut 52 versehen. In ähnlicher Weise ist in einer an die Dichtfläche 46 angrenzenden und sich im wesentlichen senkrecht von der Dichtfläche 46 sowie gegenüber der ersten Oberfläche 50 erstreckenden zweiten Oberfläche 54 des Dichtelementgrundkörpers 44 eine zweite Nut 56 ausgebildet. In der ersten Nut 52 ist ein erstes Federelement 58 angeordnet und in der zweiten Nut 56 ist ein zweites Federelement 60 angeordnet.

Die Federelemente 58, 60 weisen jeweils einen U-förmigen Querschnitt auf. Durch die Federelemente 58, 60 wird der Grundkörper 44 des ersten Dichtelements 40 in eine gewünschte Form vorgespannt. Insbesondere drängen die Federelemente 58, 60 die Dichtfläche 46 des ersten Dichtelements 40 gegen die Innenfläche des Basiskörpers 14 des Gehäuseelements 12. Durch die von den Federelementen 48, 60 aufgebrachte Federvorspannkraft kann in im Betrieb der Anlage zur Herstellung von Werkstücken durch Beaufschlagen von Pulverschicht mit elektromagnetischer Strahlung oder Teilchenstrahlung auftretender Abrieb des ersten Dichtelements 40 kompensiert werden, d.h. das erste Dichtelement 40 ist als selbstnachstellendes Dichtelement ausgebildet.

Um zu verhindern, dass im Betrieb der Anlage zur Herstellung von Werkstücken durch Beaufschlagen von Pulverschichten mit elektromagnetischer Strahlung oder Teilchenstrahlung Pulverpartikel in die dem Substratelement 22 und folglich dem Prozessraum der Anlage zugewandte erste Nut 52 des ersten Dichtelements 40 eindringen, ist in der ersten Nut 52 ein Nutdichtelement 62 angeordnet. Das Nutdichtelement 62 ist in Form einer Silikon-Rundschnur ausgebildet.

Schließlich ist eine Umfangsfläche des Hubelements 38 mit zwei Nuten 64, 66 versehen. In den Nuten 64, 66 sind aus einem Filzmaterial bestehende zweite Dichtelemente 68, 70 aufgenommen. Die zweiten Dichtelemente 68, 70 sorgen für eine Abdichtung des Hubelements 38 gegenüber dem Gehäuseelement 12. Ferner tragen die zweiten Dichtelemente 68, 70 an der Innenfläche des Basiskörpers 14 des Gehäuseelements 12 beispielsweise aufgrund statischer Aufladung anhaftende Pulverpartikel ab und minimieren dadurch die Abriebbeanspruchung des ersten Dichtelements 40. Das Filzmaterial der zweiten Dichtelemente 68, 70 "saugt" die Pulverpartikel auf, so dass die zweiten Dichtelemente 68, 70 gewechselt werden müssen, wenn Sie mit Pulver "gesättigt" sind.

## Patentansprüche

1. Trägeranordnung (10) zur Verwendung in einer Anlage zur Herstellung von Werkstücken durch Beaufschlagen von Pulverschichten mit elektromagnetischer Strahlung oder Teilchenstrahlung, mit:
- einem Gehäuseelement (12) und
- einem in dem Gehäuseelement (12) angeordneten Träger (18), der dazu eingerichtet ist, im Betrieb der Anlage zur Herstellung von Werkstücken durch Beaufschlagen von Pulverschichten mit elektromagnetischer Strahlung oder Teilchenstrahlung Rohstoffpulver und/oder ein aus dem Rohstoffpulver hergestelltes Werkstück aufzunehmen,
**dadurch gekennzeichnet, dass** ein erstes Dichtelement (40) zur Abdichtung des Trägers (18) gegenüber dem Gehäuseelement (12) einen Grundkörper (44) aus einem elastisch verformbaren Material umfasst, der durch mindestens ein Federelement (58, 60) in eine gewünschte Form vorgespannt wird.

2. Trägeranordnung nach Anspruch 1,
**dadurch gekennzeichnet, dass** sich das erste Dichtelement (40) zwischen dem Träger (18) oder einer Trägerkomponente (24) und dem Gehäuseelement (12) um einen Außenumfang des Trägers (18) oder der Trägerkomponente (24) erstreckt.

3. Trägeranordnung nach Anspruch 1 oder 2,
**dadurch gekennzeichnet, dass** das erste Dichtelement (40) zumindest teilweise in einer Nut (42) aufgenommen ist, die in einer Umfangsfläche des Trägers (18) oder einer Trägerkomponente (24) ausgebildet ist.

4. Trägeranordnung nach einem der Ansprüche 1 bis 3,
**dadurch gekennzeichnet, dass** der Grundkörper (44) des ersten Dichtelements (40) aus einem Polytetrafluorethylenmaterial oder einem Polytetrafluorethylen-Copolymermaterial besteht.

5. Trägeranordnung nach einem der Ansprüche 1 bis 4,
**dadurch gekennzeichnet, dass** der Grundkörper (44) des ersten Dichtelements (40) Kohlenstofffasern enthält.

6. Trägeranordnung nach einem der Ansprüche 1 bis 5,
**dadurch gekennzeichnet, dass** der Grundkörper (44) des ersten Dichtelements (40) im Bereich einer an eine Dichtfläche (46) des ersten Dichtelements (40) angrenzenden ersten Oberfläche (54) mit einer ersten Nut (52) versehen ist, in der ein erstes Federelement (58) angeordnet ist.

7. Trägeranordnung nach einem der Ansprüche 1 bis 6,
**dadurch gekennzeichnet, dass** der Grundkörper (44) des ersten Dichtelements (40) im Bereich einer an eine Dichtfläche (46) des ersten Dichtelements (40) angrenzenden zweiten Oberfläche (54) mit einer zweiten Nut (56) versehen ist, in der ein zweites Federelement (60) angeordnet ist.

8. Trägeranordnung nach Anspruch 6 oder 7,
**dadurch gekennzeichnet, dass** das erste und/oder das zweite Federelement (58, 60) einen im Wesentlichen U-förmigen Querschnitt aufweist/aufweisen.

9. Trägeranordnung nach einem der Ansprüche 6 bis 8,
**dadurch gekennzeichnet, dass** in der ersten und/oder der zweiten Nut (52, 56), die in dem Grundkörper (44) des ersten Dichtelements (40) ausgebildet ist/sind, ein Nutdichtelement (62) zur Abdichtung der ersten und/oder der zweiten Nut (52, 56) angeordnet ist.

10. Trägeranordnung nach einem der Ansprüche 1 bis 9,
**dadurch gekennzeichnet, dass** der Grundkörper (44) des ersten Dichtelements (40) im Bereich einer Dichtfläche (46) des ersten Dichtelements (40) mit einer Mehrzahl von Dichtlippen (48) versehen ist.

11. Trägeranordnung nach einem der Ansprüche 1 bis 10,
**dadurch gekennzeichnet, dass** das erste Dichtelement (40) in einem Bereich des Trägers (18) angeordnet ist, der im in einer Anlage zur Herstellung von Werkstücken durch Beaufschlagen von Pulverschichten mit elektromagnetischer Strahlung oder Teilchenstrahlung montierten Zustand der Trägeranordnung (10) einem Prozessraum der Anlage zur Herstellung von Werkstücken durch Beaufschlagen von Pulverschichten mit elektromagnetischer Strahlung oder Teilchenstrahlung zugewandt ist.

12. Trägeranordnung nach einem der Ansprüche 1 bis 11,
**dadurch gekennzeichnet, dass** in einem Bereich des Trägers (18) oder einer Komponente (38) einer Antriebseinrichtung (20) zur Verschiebung des Trägers (18) in dem Gehäuseelement (12), der im in einer Anlage zur Herstellung von Werkstücken durch Beaufschlagen von Pulverschichten mit elektromagnetischer Strahlung oder Teilchenstrahlung montierten Zustand der Trägeranordnung (10) von einem Prozessraum der Anlage zur Herstellung von Werkstücken durch Beaufschlagen von Pulverschichten mit elektromagnetischer Strahlung oder Teilchenstrahlung abgewandt ist, mindestens ein zweites Dichtelement (68, 70) zur Abdichtung des Trägers (18) oder der Komponente (38) der Antriebseinrichtung (20) gegenüber dem Gehäuseelement (12) vorgesehen ist.

13. Trägeranordnung nach Anspruch 12,
**dadurch gekennzeichnet, dass** das zweite Dichtelement (68, 70) aus einem Filzmaterial besteht.

14. Trägeranordnung nach Anspruch 12 oder 13,
**dadurch gekennzeichnet, dass** das zweite Dichtelement (68, 70) zumindest teilweise in einer weiteren Nut (64, 66) aufgenommen ist, die in einer Umfangsfläche des Träger (18), einer Trägerkomponente oder einer Komponente (38) einer Antriebseinrichtung (20) zur Verschiebung des Trägers (18) in dem Gehäuseelement (12) ausgebildet ist.

15. Anlage zur Herstellung von Werkstücken durch Beaufschlagen von Pulverschichten mit elektromagnetischer Strahlung oder Teilchenstrahlung, mit:
- einer Trägeranordnung (10), die ein Gehäuseelement (12) sowie einen in dem Gehäuseelement (12) angeordneten Träger (18) umfasst, wobei der Träger (18) dazu eingerichtet ist, im Betrieb der Anlage zur Herstellung von Werkstücken durch Beaufschlagen von Pulverschichten mit elektromagnetischer Strahlung oder Teilchenstrahlung Rohstoffpulver und/oder ein aus dem Rohstoffpulver hergestelltes Werkstück aufzunehmen,
- einer über den Träger (18) bewegbaren Pulverauftragvorrichtung zum schichtweisen Aufbringen des Rohstoffpulvers auf den Träger (18) und
- einer Bestrahlungseinrichtung zur selektiven Beaufschlagung einer auf den Träger (18) aufgebrachten Rohstoffpulverschicht mit elektromagnetischer Strahlung oder Teilchenstrahlung,
**dadurch gekennzeichnet, dass** die Trägeranordnung (10) eine Trägeranordnung nach einem der Ansprüche 1 bis 14 ist.

## Geänderte Patentansprüche

### Geänderte Patentansprüche gemäss Regel 137(2) EPÜ.

**1.** Trägeranordnung (10) zur Verwendung in einer Anlage zur Herstellung von Werkstücken durch Beaufschlagen von Pulverschichten mit elektromagnetischer Strahlung oder Teilchenstrahlung, mit:
- einem Gehäuseelement (12) und
- einem in dem Gehäuseelement (12) angeordneten Träger (18), der dazu eingerichtet ist, im Betrieb der Anlage zur Herstellung von Werkstücken durch Beaufschlagen von Pulverschichten mit elektromagnetischer Strahlung oder Teilchenstrahlung Rohstoffpulver und/oder ein aus dem Rohstoffpulver hergestelltes Werkstück aufzunehmen,
**dadurch gekennzeichnet, dass** ein erstes Dichtelement (40) zur Abdichtung des Trägers (18) gegenüber dem Gehäuseelement (12) einen Grundkörper (44) aus einem elastisch verformbaren Material umfasst, der durch mindestens ein Federelement (58, 60) in eine gewünschte Form vorgespannt wird, wobei das mindestens eine Federelement (58) in einer Nut (52) angeordnet ist, die in dem Grundkörper (44) im Bereich einer an eine Dichtfläche (46) des ersten Dichtelements (40) angrenzenden Oberfläche (54) ausgebildet ist.

**2.** Trägeranordnung nach Anspruch 1,
**dadurch gekennzeichnet, dass** sich das erste Dichtelement (40) zwischen dem Träger (18) oder einer Trägerkomponente (24) und dem Gehäuseelement (12) um einen Außenumfang des Trägers (18) oder der Trägerkomponente (24) erstreckt.

**3.** Trägeranordnung nach Anspruch 1 oder 2,
**dadurch gekennzeichnet, dass** das erste Dichtelement (40) zumindest teilweise in einer Nut (42) aufgenommen ist, die in einer Umfangsfläche des Trägers (18) oder einer Trägerkomponente (24) ausgebildet ist.

**4.** Trägeranordnung nach einem der Ansprüche 1 bis 3,
**dadurch gekennzeichnet, dass** der Grundkörper (44) des ersten Dichtelements (40) aus einem Polytetrafluorethylenmaterial oder einem Polytetrafluorethylen-Copolymermaterial besteht.

**5.** Trägeranordnung nach einem der Ansprüche 1 bis 4,
**dadurch gekennzeichnet, dass** der Grundkörper (44) des ersten Dichtelements (40) Kohlenstofffasern enthält.

**6.** Trägeranordnung nach einem der Ansprüche 1 bis 5,
**dadurch gekennzeichnet, dass** der Grundkörper (44) des ersten Dichtelements (40) im Bereich einer an die Dichtfläche (46) des ersten Dichtelements (40) angrenzenden weiteren Oberfläche (54) mit einer weiteren Nut (56) versehen ist, in der ein zweites Federelement (60) angeordnet ist.

**7.** Trägeranordnung nach einem der Ansprüche 1 bis 6,
**dadurch gekennzeichnet, dass** das/die Federelement(e) (58, 60) einen im Wesentlichen U-förmigen Querschnitt aufweist/aufweisen.

**8.** Trägeranordnung nach einem der Ansprüche 1 bis 7,
**dadurch gekennzeichnet, dass** in der Nut und/oder der weiteren Nut (52, 56), die in dem Grundkörper (44) des ersten Dichtelements (40) ausgebildet ist/sind, ein Nutdichtelement (62) zur Abdichtung der Nut und/oder der weiteren Nut (52, 56) angeordnet ist.

**9.** Trägeranordnung nach einem der Ansprüche 1 bis 8,
**dadurch gekennzeichnet, dass** der Grundkörper (44) des ersten Dichtelements (40) im Bereich einer Dichtfläche (46) des ersten Dichtelements (40) mit einer Mehrzahl von Dichtlippen (48) versehen ist.

**10.** Trägeranordnung nach einem der Ansprüche 1 bis 9,
**dadurch gekennzeichnet, dass** das erste Dichtelement (40) in einem Bereich des Trägers (18) angeordnet ist, der im in einer Anlage zur Herstellung von Werkstücken durch Beaufschlagen von Pulverschichten mit elektromagnetischer Strahlung oder Teilchenstrahlung montierten Zustand der Trägeranordnung (10) einem Prozessraum der Anlage zur Herstellung von Werkstücken durch Beaufschlagen von Pulverschichten mit elektromagnetischer Strahlung oder Teilchenstrahlung zugewandt ist.

**11.** Trägeranordnung nach einem der Ansprüche 1 bis 10,
**dadurch gekennzeichnet, dass** in einem Bereich des Trägers (18) oder einer Komponente (38) einer Antriebseinrichtung (20) zur Verschiebung des Trägers (18) in dem Gehäuseelement (12), der im in einer Anlage zur Herstellung von Werkstücken durch Beaufschlagen von Pulverschichten mit elektromagnetischer Strahlung oder Teilchenstrahlung montierten Zustand der Trägeranordnung (10) von einem Prozessraum der Anlage zur Herstellung von Werkstücken durch Beaufschlagen von Pulverschichten mit elektromagnetischer Strahlung oder Teilchenstrahlung abgewandt ist, mindestens ein zweites Dichtelement (68, 70) zur Abdichtung des Trägers (18) oder der Komponente (38) der Antriebseinrichtung (20) gegenüber dem Gehäuseelement (12) vorgesehen ist.

**12.** Trägeranordnung nach Anspruch 11,
**dadurch gekennzeichnet, dass** das zweite Dichtelement (68, 70) aus einem Filzmaterial besteht.

**13.** Trägeranordnung nach Anspruch 11 oder 12,
**dadurch gekennzeichnet, dass** das zweite Dichtelement (68, 70) zumindest teilweise in einer weiteren Nut (64, 66) aufgenommen ist, die in einer Umfangsfläche des Träger (18), einer Trägerkomponente oder einer Komponente (38) einer Antriebseinrichtung (20) zur Verschiebung des Trägers (18) in dem Gehäuseelement (12) ausgebildet ist.

**14.** Anlage zur Herstellung von Werkstücken durch Beaufschlagen von Pulverschichten mit elektromagnetischer Strahlung oder Teilchenstrahlung, mit:
- einer Trägeranordnung (10), die ein Gehäuseelement (12) sowie einen in dem Gehäuseelement (12) angeordneten Träger (18) umfasst, wobei der Träger (18) dazu eingerichtet ist, im Betrieb der Anlage zur Herstellung von Werkstücken durch Beaufschlagen von Pulverschichten mit elektromagnetischer Strahlung oder Teilchenstrahlung Rohstoffpulver und/oder ein aus dem Rohstoffpulver hergestelltes Werkstück aufzunehmen,
- einer über den Träger (18) bewegbaren Pulverauftragvorrichtung zum schichtweisen Aufbringen des Rohstoffpulvers auf den Träger (18) und
- einer Bestrahlungseinrichtung zur selektiven Beaufschlagung einer auf den Träger (18) aufgebrachten Rohstoffpulverschicht mit elektromagnetischer Strahlung oder Teilchenstrahlung,
**dadurch gekennzeichnet, dass** die Trägeranordnung (10) eine Trägeranordnung nach einem der Ansprüche 1 bis 13 ist.
